# EUROPEAN PATENT APPLICATION

(11) **EP 1 679 340 A1**
(43) Date of publication of application: **12.07.2006**
(21) Application number: 04793388.2
(22) Date of filing: 29.10.2004
(51) Int. Cl.: C08J 9/04, C08J 3/24, C08L 23/16

(54) **RESIN COMPOSITION FOR FOAM MOLDING, FOAM, AND PROCESS FOR PRODUCING FOAM**

(30) Priority: 31.10.2003 JP 2003373755
(71) Applicant: NHK SPRING CO., LTD., Yokohama-shi, Kanagawa 236-0004 (JP)
(72) Inventor: KUSAKAWA, Koichi, c/o NHK SPRING CO., Ltd., Yokohama-shi, Kanagawa 2360004 (JP); ICHIMURA, Shigeki, c/o NHK SPRING CO., Ltd., Yokohama-shi, Kanagawa 23600 04 (JP)
(74) Representative: HOFFMANN EITLE
(86) International application number: PCT/JP2004/016468
(87) International publication number: WO 2005/049706

(57) **Abstract**

A resin composition for a foam is composed of a branched rubbery olefin based soft resin (C) obtained by kneading and reacting an organic peroxide crosslinking type olefin based copolymer rubber (A) and an organic peroxide decomposing type crystalline olefin resin (B), in which the organic peroxide crosslinking type olefin based copolymer rubber (A) is present as a continuous phase as well as the organic peroxide decomposing type crystalline olefin resin (B) is present as a discontinuous phase in its microaggregation structure. This resin composition enables to provide foamed articles which can be used for interior parts for automobiles, have high to low foaming magnifications and a recycling property, and are soft and excellent in cushion property, thermal insulating property and in-mold foam molding property.

## Description

### TECHNICAL FIELD

The present invention relates to a resin composition for foam molding, a foam and a method for producing the foam. Particularly, the present invention relates to a resin composition capable of obtaining a foam molded body which is usable for interior parts for automobiles, has a highly flexible foaming magnification from low to high foaming, and is soft and excellent in cushion property, thermal insulating property and recycling efficiency, a foam obtained by using the resin composition, and a method for producing the foam.

### BACKGROUND ART

Conventionally, as a foam material which has a high foaming magnification, is excellent in fabrication in molds and has soft feeling and cushion property in foam molding in molds, there has been urethane foam. Because of being thermosetting resin, the urethane foam is utilized as chip foam in terms of material recycling, but has many problems for recycling as a foam raw material and is the material with low recycling potential.

Thermoplastic olefin based elastomer has been widely used as the material with good recycling property, and foams thereof have also been approached (Japanese Patent Application Laid-Open No. 54-112967). In this conventional art, "a method for producing a thermoplastic elastomer foam characterized by obtaining a mixture of 90 to 50 parts by weight of a peroxide crosslinking type olefin based copolymer rubber (a), 10 to 50 parts by weight of a peroxide decomposing type olefin based plastic (b) [where, (a) + (b) is 100 parts by weight], 5 to 50 parts by weight of a peroxide non-crosslinking type rubber-like substance (c) and/or a mineral oil based softener, dynamically treating this mixture with heat in the presence of an organic peroxide to yield a foam composition composed of a slightly crosslinked rubber composition (A) and a decomposing type foaming agent (B), and obtaining a molded article by heating and melting this foam composition followed by foaming" has been disclosed.

However, in the technology disclosed in this Japanese Patent Application Laid-Open No. 54-112967, the foaming magnification in the obtained foam is extremely low and the foam can not come into practical use as disclosed in its Example. This was also confirmed by check experiments by the present inventors.

In order to improve the problems in the technology disclosed in the above Japanese Patent Application Laid-Open No. 54-112967, a method for forming a cushion layer (foam molded body) of an interior surface material excellent in recycling property by combining a particular olefin resin in a small amount with a partially crosslinked olefin based thermoplastic elastomer has been proposed (Japanese Patent Application Laid-Open No. 9-143297). Additionally, a method for forming a cushion layer (foam molded body) of an interior surface material excellent in recycling property by combining a particular styrene based thermoplastic elastomer in a small amount with a similarly partially crosslinked olefin based thermoplastic elastomer has been also proposed (Japanese Patent Application Laid-Open No. 14-206034).

However, the foaming magnification by extrusion foaming is 2.9 times at a maximum in the former Japanese Patent Application Laid-Open No. 9-143297, and the foaming magnification by injection foaming is 2.5 times at a maximum in the latter Japanese Patent Application Laid-Open No. 14-206034. Both foaming magnifications are low. Thus, no product which satisfies the feel and the cushion property has been obtained.

Conventionally, as a procedure to enhance the soft cushion property, the method of foaming effectively by giving crosslinking to an olefin based thermoplastic elastomer based material using a crosslinking agent (increasing a gel fraction) to increase a fluid viscosity has been known (Japanese Patent Applications Laid-Open Nos. 54-112967 and 9-143297).

The study by the present inventors has revealed that the technologies disclosed in these Japanese Patent Applications Laid-Open Nos. 54-112967 and 9-143297 contribute to enhancement of rubber elasticity of the resin itself but have various problems for foaming. That is, the present inventors have found that in the technologies disclosed in Japanese Patent Applications Laid-Open Nos. 54-112967 and 9-143297, (i) it is necessary that a foaming agent is dispersed, dissolved and has been dissolved in a base material before foam molding, thus, when a crosslinking density (gel fraction) of the base material is high, the foaming agent can not been uniformly dispersed, dissolved and has not been uniformly dissolved in the base material, thereby (ii) the combined foaming agent can not effectively contribute to foaming, and (iii) consequently, the foaming magnification is not increased. The present inventors have known from the study that in the technologies disclosed in these references, (iv) because of the high viscosity, shearing to the base resin becomes remarkable, a microaggregation structure in the base material is changed and simultaneously the base resin is decomposed by the shearing when the foaming agent is dispersed, thereby (v) leading to excessive reduction of the fluid viscosity, and thus it becomes unstable to effectively foam in molds and dies and control a molded shape.

As mentioned above, it is an actual circumstance that conventional proposals have not provide yet an in-mold foam molded article which is excellent in recycling property and in-mold fabrication, has high foaming magnification of the cushion layer and soft cushion property excellent in texture.

The present invention has been made in the light of the above circumstance, and an aim is to provide a resin composition capable of obtaining a foam which is usable for interior parts for automobiles, having a high foaming magnification, soft and excellent in cushion property and thermal insulating property, a foam obtained by using the resin composition and a method for producing the foam.

### DISCLOSURE OF INVENTION

As a result of an extensive study for solving the above problems, the present inventors have confirmed that a desired foam may be obtained by using an olefin based thermoplastic elastomer composition having a particular constitution as a resin composition for foam molding. (Olefin based thermoplastic elastomer composition for foam molding)

The resin composition specified by the present inventors is the olefin based thermoplastic elastomer capable of foaming at high foaming magnification, by which the foam excellent in soft cushion property and thermal insulating property can be obtained. This olefin based thermoplastic elastomer is a branched rubber-like olefin based soft resin (C) which is composed of an organic peroxide crosslinking type olefin based copolymer rubber (A) and an organic peroxide decomposing type crystalline olefin resin (B), obtained by a kneading reaction of these rubber (A) and resin (B), and is characterized in that the organic peroxide crosslinking type olefin based copolymer rubber (A) is present as a continuous phase as well as the organic peroxide decomposing type crystalline olefin resin (B) is present as a discontinuous phase in its microaggregation structure.

The microaggregation structure referred to in the present invention means a "microscopic organized structure of a rubber phase and a crystal phase" obtained when a resin composition for foam molding composed of a rubber component and a resin component is treated with a staining agent such as osmium trioxide and ruthenium tetraoxide, and then observed using a transmission electron microscope (accelerating voltage: 200 kV, hereinafter abbreviated as TEM). The olefin based thermoplastic elastomer according to the present invention is characterized by having the organized structure in which the rubber component forms the continuous phase and the island shaped resin component is dispersed in this continuous phase of the rubber component as described below.

The rubber phase and the crystal phase in such a microaggregation structure may be determined as follows. That is, the organic peroxide crosslinking type olefin based copolymer rubber (A) alone treated with the staining agent exhibited dark block color entirely when observed using TEM whereas the organic peroxide decomposing type crystalline olefin resin (B) alone treated similarly exhibited light white color entirely when observed similarly. Thus, the rubber component phase and the crystal component phase may be determined to exhibit the dark block and the light white, respectively.

As described above, the resin composition of the present invention is characterized by having the microaggregation structure in which "the organic peroxide crosslinking type olefin based copolymer rubber (A) which is its component is present as the continuous phase as well as the organic peroxide decomposing type crystalline olefin resin (B) which is the other component is present as the discontinuous phase. This microaggregation structure is not fixed to a narrow range, and has a relatively wide variation. That is, areas occupied by the continuous phase and the discontinuous phase are not fixable, have a certain variation range, and a broad foaming magnification range from a low foaming magnification to a high foaming magnification may be optionally set up by the variation range. Therefore, the foam having the desired foaming magnification may be obtained by controlling such a microaggregation structure in the present invention. Controlling factors thereof include the followings. That is, the "microaggregation structure composed of the continuous phase and the discontinuous phase" of the present invention may be controlled by constitutions, molecular weights and a combined ratio of the rubber component and the crystalline resin component, and also controlled by conditions such as shearing degree and temperature upon mixing, a branching degree (gel fraction) of the rubbery olefin based soft resin as described later, melting viscosity difference of respective components and a relationship of interfacial tension such as combination of a compatibilizing agent. Having various controlling factors mean that the foaming magnification may be delicately controlled by combining the various controlling factors, and contribute to the characteristic of the present invention that "the foam having the optional foaming magnification which covers the range from the low foaming magnification to high foaming magnification which exceeds the conventional one can be provided".

According to the study by the present inventors, when the microaggregation structure of the rubbery olefin based soft resin (C) is an organized structure in which the organic peroxide crosslinking type olefin based copolymer rubber (A) is present as the continuous phase and the organic peroxide decomposing type crystalline olefin resin (B) is present as the discontinuous phase, the resin (C) is excellent in foaming property and enables 3 times or more foaming magnification. On the contrary, the present inventors have found that when the microaggregation structure of the rubber olefin based soft resin (C) is an organized structure in which the organic peroxide decomposing type crystalline olefin resin (B) is present as the continuous phase and the organic peroxide crosslinking type olefin based copolymer rubber (A) is present as the discontinuous phase, the foaming property is inferior, the 3 times or more foaming magnification can not be obtained stably, and the continuous phase is made of the crystalline olefin resin (B), thus flexibility and cushion property are further deteriorated.

### (Organic peroxide crosslinking type olefin based copolymer rubber (A))

The organic peroxide crosslinking type olefin based copolymer rubber (A) used in the present invention is an amorphous random elastic copolymer containing α-olefin having 2 to 20 carbon atoms at 50 mol% or more or an elastic copolymer having a crystallinity of 50% or less, and non-conjugated diene copolymer with non-crystalline α-olefin composed of two types or more of α-olefin, or two types or more of α-olefin.

Specific examples of such an olefin based copolymer rubber include the following rubbers.
(a) Ethylene α-olefin copolymer rubber [ethylene/α-olefin (molar ratio) = about 90/10 to 50/50]
(b) Ethylene α-olefin non-conjugated diene copolymer rubber [ethylene/α-olefin (molar ratio) = about 90/10 to 50/50]
(c) Propylene α-olefin copolymer rubber [propylene/α-olefin (molar ratio) = about 90/10 to 50/50]
(d) Butene α-olefin copolymer rubber [butene/α-olefin (molar ratio) = about 90/10 to 50/50]

Specific examples of the above α-olefin may include ethylene, propylene, 1-butene, 1-pentene, 4-methyl-1-pentene, 1-hexene, 1-octene, 1-nonene, 1-decene, 1-undecene, 1-dodecene, 1-tridecene, 1-tetradecene, 1-pantadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and combinations thereof.

Specific examples of the above non-conjugated diene may include dicyclopentadiene, 1,4-hexadiene, cyclooctadiene, methylene norbornene and ethylidene norbornene.

Mooney viscosity [ML 1.4 (100°C)] of these copolymers is 10 to 250, and in particular preferably 40 to 150.

It is preferable that the above (b) ethylene α-olefin non-conjugated diene copolymer rubber has an iodine value of 25 or less.

In the mixture of the organic peroxide crosslinking type olefin based copolymer rubber (A) and the organic peroxide decomposing type crystalline olefin resin (B) used in the present invention, a combined amount of the organic peroxide crosslinking type olefin based copolymer rubber (A) is preferably 30 parts by weight or more and less than 100 parts by weight, more preferably 60 parts by weight or more and less than 100 parts by weight and particularly 65 to 95 parts by weight based on total 100 parts by weight of the organic peroxide crosslinking type olefin based copolymer rubber (A) and the organic peroxide decomposing type crystalline olefin resin (B).

In a combined ratio of the organic peroxide crosslinking type olefin based copolymer rubber (A) and the organic peroxide decomposing type crystalline olefin resin (B), when the ratio is shifted from a favorable ratio to an unfavorable ratio, the component in the continuous phase and the component in the discontinuous phase are reversed in the microaggregation structure in the rubbery olefin based soft resin (C) obtained by mixing and kneading, and the foaming magnification becomes prone to lower.

### (Organic peroxide decomposing type crystalline olefin resin (B))

The organic peroxide decomposing type crystalline olefin resin (B) used in the present invention may include a homopolymer or a copolymer of α-olefin having 2 to 20 carbon atoms.

Specific examples of the above organic peroxide decomposing type crystalline olefin resin (B) may include the following (co)polymers.
(a) Propylene homopolymer
(b) Random copolymer of propylene with 10 mol% or less of other α-olefin
(c) Block copolymer of propylene with 30 mol% or less of other α-olefin
(d) 1-Buten homopolymer
(e) Random copolymer of 1-buten homopolymer with 10 mol% or less of other α-olefin
(f) 4-Methyl-1-pentene homopolymer
(g) Random copolymer of 4-methyl-1-pentene with 20 mol% or less α-olefin

Specific examples of the above α-olefin may include the same α-olefin as the specific examples of α-olefin which configure the olefin copolymer rubber described above.

In "the mixture of the organic peroxide crosslinking type olefin based copolymer rubber (A) and the organic peroxide decomposing type crystalline olefin resin (B)", the combined amount of the organic peroxide decomposing type crystalline olefin resin (B) is preferably less than 70 parts by weight, more preferably less than 40 parts by weight, and in particular preferably 5 to 35 parts by weight based on total 100 parts by weight of the organic peroxide crosslinking type olefin based copolymer rubber (A) and the organic peroxide decomposing type crystalline olefin resin (B).

As a modifying agent for "the mixture of the organic peroxide crosslinking type olefin based copolymer rubber (A) and the organic peroxide decomposing type crystalline olefin resin (B)" described above, styrene-butadiene (isoprene)-styrene block copolymer, polybutadiene rubber, polyisoprene rubber and various hydrogenerated rubber thereof, and isobutylene rubber and chlorinated polyethylene may be added in an amount of 50% by weight or less relative to total 100% by weight of the olefin based synthetic rubber and the crystalline olefin resin, thereby providing an effect where a microaggregation structure in the present invention can be stabilized.

As a softener for the mixture, a paraffin based, naphthene-based, or aromatic softener, or an ester based plasticizer may be added in an amount of 50% by weight or less relative to total 100% by weight of the organic peroxide decomposing type crystalline olefin resin (B) and the organic peroxide crosslinking type olefin based copolymer rubber (A).

The organic peroxide crosslinking type olefin based copolymer rubber (A) as the above is present mainly in a branched state and the percentage of crosslinked form is low in the unfoamed olefin based thermoplastic elastomer for foam molding composed of the mixture of the organic peroxide crosslinking type olefin based copolymer rubber (A) and the organic peroxide decomposing type crystalline olefin resin (B). Thus, the foaming agent is dispersed, kneaded or dissolved without trouble, and a fluidity and a foamability are not interfered upon injection molding and extrusion molding.

### (Branch)

In the method for measuring the gel fraction conventionally used, cyclohexane is used as a solvent, a compound to be measured is immersed in this solvent for 48 hours at room temperature, and a component insoluble in the solvent is addressed as a gel content. Cyclohexane can dissolve most non-crosslinked EPDM rubbers, but can scarcely dissolve non-crosslinked crystalline polypropylene. When a crosslinked moiety of EPDM rubber is evaluated as the gel content or when non-crosslinked crystalline polypropylene is evaluated as the gel content of pseudo-crosslinking, the conventional measurement method and a value of the gel fraction using cyclohexane as the solvent exhibit the crosslinking in a broad sense including the pseudo-crosslinking and have a meaning as an indicator which represents a mechanical physical property of the base material. However, in the study results by the present inventors, it has been found that large factors which enhance the foamability are chemical crosslinking and branches and the pseudo-crosslinking scarcely contribute thereto. Therefore, it has been found that as the indicator which controls the foamability, the gel fraction measured using cyclohexane as the solvent has no meaning and inappropriate.

In the present invention, as the indicator capable of evaluating "the chemical branch specified as a contributor for enhancing the foamability", the following gel fraction is preferable. This gel fraction is measured as follows. That is, the olefin based thermoplastic elastomer for foam molding is prepared by cutting into 0.5 mm square size, 0.5 g thereof is exactly weighed and wrapped with stainless mesh (#600), this is extracted in boiled xylene (138°C) for 3 hours, the extract is again washed thoroughly with boiled xylene separately prepared, xylene is then replaced with acetone, the extract is dried in an oven at 80°C for 24 hours, a residual in the mesh after the extraction is weighed, a percentage of the weight of the residual after the extraction relative to the initial weight is calculated, and this value is made the gel fraction (%).

Not to interfere with the fluidity and the foamability upon foam molding in the olefin based thermoplastic elastomer for foam molding of the present invention, it is preferable that the percentage of the branches present in the olefin based thermoplastic elastomer is less than 10%, and more preferably less than 5% as the gel fraction obtained by the extraction with boiled xylene (138°C) for 3 hours.

This gel fraction of less than 10% by weight is particularly preferable because the fluidity is excellent, the foaming magnification is also high and the foam molding in the molds and dies becomes easy. On the contrary, it is necessary that the foaming agent is dispersed, dissolved and has been dissolved in the base material before the foam molding. Thus, if the gel fraction exceeds 10% by weight, i.e., the crosslinking density (gel fraction) in the base material becomes high, then it becomes difficult that foaming agent is uniformly dispersed, dissolved and has been uniformly dissolved in the base material, the foaming magnification is not increased, and the fluidity is poor. Therefore, foam molded shapes in the molds and dies are prone to be remarkably inferior.

When the gel fraction is 10% by weight or more, the fluid viscosity becomes high, and thus, the molecules are remarkably cleaved by shearing heating when dispersing and kneading the foaming agent before in-mold foam molding. Even if the component fraction of the organic peroxide crosslinking type olefin based copolymer rubber (A) in the olefin based thermoplastic elastomer (C) is 65 to 95 parts by weight (the component fraction of the organic peroxide decomposing type crystalline olefin resin (B) is 35 to 5 parts by weight), the organic peroxide decomposing type crystalline olefin resin (B) configures the continuous phase and the organic peroxide crosslinking type olefin based copolymer rubber (A) configures the discontinuous phase in the microaggregation structure. That is a reversed phase structure of the preferable continuous/discontinuous structure, and results in the remarkably lowered foaming magnification.

To give the branches having such a gel fraction of less than 10% by weight, the organic peroxide crosslinking type olefin based copolymer rubber and the organic peroxide decomposing type crystalline olefin resin may be kneaded at high temperature, and a crosslinking agent usually used for vulcanization of the rubber may also be used as the crosslinking agent. Preferably, publicly known methods such as a method of using peroxide, electron beam irradiation, sulfur vulcanization and silane crosslinking may be used. Furthermore, as a phenol resin, it is possible to use bromide of alkylphenol resin, curing agents such as mixed crosslinking agents containing a halogen donor such as tin chloride and chloroprene, and alkylphenol resin. In these methods of giving the branches, the method of using peroxide and the electron beam irradiation are desirable because they are easily controlled.

Specific examples of the above peroxide preferably used may include dicumylperoxide, di-tert-butyl peroxide, 2,5-dimethyl-2,5-di(tert-butylperoxy)hexane, 2,5-dimethyl-2,5-di(tert-butylperoxy)hexine-3, 1,3-bis(tert-butylperoxyisopropy)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxy benzoate, tert-butyl perbenzoate, tert-butylperoxyisopropyl carbonate, diacetyl peroxide, lauroyl peroxide and tert-butylcumyl peroxide.

Among these peroxides, 2,5-dimethyl-2,5-di(tert-butylperoxy)hexane, 2,5-dimethyl-2,5-di(tert-butylperoxy)hexine-3, 1,3-bis(tert-butylperoxyisopropy)benzene, 1,1-bis(tert-butylperoxy)-3,3, 5-trimethylcyclohexane and n-butyl-4,4-bis(tert-butylperoxy)valerate are preferable in terms of odor and scorch stability, and among others, 1,3-bis(tert-butylperoxyisopropy)benzene is the most preferable.

It is preferable that this peroxide is typically combined at about 0.01 to 2.5 parts by weight based on total 100 parts by weight of the unfoamed foaming resin substrate. The actual combined amount is adjusted in consideration of balance of bubble diameters, the gel fraction and the density of the foam.

In the present invention, when the branches are given by treating with the above peroxide, as an auxiliary agent of the treatment, peroxy crosslinking aids such as sulfur, p-quinonedioxime, p, p'-benzoyl quinonedioxime, N-methyl-N-4-dinitrosoaniline, nitrosobenzene, diphenylguanidine and N, N'-m-phenylenedimaleimide, or divinylbenzene, triallyl cyanurate, polyfunctional methacrylate monomer such as ethylene glycol dimethacrylate, trimethylolpropane trimethacrylate and acryl methacrylate, and polyfunctional vinyl monomer such as vinyl butyrate and vinyl stearate may be combined.

The fluidity and the foamability of the foaming substrate resin may be adjusted optionally also by the combined amount of these auxiliary agents.

But when branching and partial crosslinking of the resin is performed by irradiation of ionizing radiation such as electron beam, neutron, α-ray, β-ray, γ-ray, X-ray and ultraviolet ray, the crosslinking agent need not be combined, but when branching and partial crosslinking is performed by the irradiation of the ionizing radiation, divinylbenzene, triallyl cyanurate, polyfunctional methacrylate monomer such as ethylene glycol dimethacrylate, trimethylolpropane trimethacrylate and acryl methacrylate, and polyfunctional vinyl monomer such as vinyl butyrate and vinyl stearate may be combined as the auxiliary agent.

### (Other additives)

In the foaming substrate resin used in the present invention, additionally additives such as various weather resistant stabilizers, heat resistant stabilizers, plasticizers, flame retardants, thickeners, lubricants and coloring agents usually used for olefin based thermoplastic resins and thermoplastic elastomer compositions may be added in the ranges in which the object of the present invention is not impaired.

Specific examples of fillers which may be additionally combined in the olefin based thermoplastic elastomer for foam molding may include organic filler materials such as carbon black, nitroso pigment, colcothar, phthalocyanine pigment, pulp, fibrous chips and agar, and inorganic fillers such as clay, kaolin, silica, diatomaceous earth, aluminium hydroxide, zinc oxide, magnesium hydroxide, calcium oxide, magnesium oxide, titanium oxide, mica, bentonite, shirasu balloon, zeolite, silicate white earth, cement and silica fume.

As the method for kneading the above composition, the method of kneading using a publicly known kneader such as a V type brabender, a tumbler mixer, a ribbon brabender and a Henschel mixer, and kneading and dispersing this kneaded one using a publicly known kneader such as an open type mixing roll or a non-open type Banbury mixer, extruder kneader or continuous mixer may be preferably used.

A branching reaction may be given to the composition during a kneading step in this way, or the composition may be kneaded not to give the branching reaction and the branching reaction may be statically given by heating this kneaded one in an oven or a heat press apparatus.

It is desirable that the unfoamed olefin based thermoplastic elastomer composition for foam molding prepared by these methods is used by making into a pellet shape using a publicly known pelletizer.

### (Foamable resin and foam)

In the present invention, an unfoamed foamable master batch may also be prepared by kneading a thermally decomposing type foaming agent in the olefin based thermoplastic elastomer composition for foam molding at a temperature equal to or less than a decomposition temperature of the foaming agent.

For example, the olefin based thermoplastic elastomer composition for foam molding and the foaming agent are kneaded using the publicly known kneader such as V type brabender, a tumbler mixer, a ribbon brabender and a Henschel mixer, and if kneading is further required, they are prepared by subsequently kneading using an extruder, the mixing roll, kneader or the Banbury mixer at the temperature at which the thermal decomposing type foaming agent is not decomposed.

The foaming agent is typically used at a ratio of 1 to 25 parts by weight based on 100 parts by weight of the unfoamed foaming substrate resin.

It is desirable that the master batch of the unfoamed olefin based thermoplastic elastomer composition prepared in this way is used by making into the pellet shape by the publicly known pelletizer.

The aforementioned foaming agent combined with the olefin based foaming resin substrate is the thermally decomposing type foaming agent which thermally decomposes to generate a gas. Specific examples of such a foaming agent may include organic foaming agents such as azodicarbonamide (ADCA), diethyl azocarboxylate, barium azodicarboxylate, 4,4-oxybis(benzenesulfonylhydrazide), 3,3-disulfonhydrazidephenyl sulfonic acid, N,N'-dinitrosopentatetramine, p-toluenesulfonylhydrazide and trihydrazinotriazine, and inorganic foaming agents such as sodium hydrogen carbonate, ammonium hydrogen carbonate and ammonium carbonate. In particular, azodicarbonamide (ADCA), N,N'-dinitrosopentatetramine and trihydrazinotriazine are preferable as the organic foaming agent, and sodium hydrogen carbonate is preferable as the inorganic foaming agent. Sodium hydrogen carbonate, monosodium citrate and glycerine fatty acid ester may also be mixed and used. These foaming agents may be used alone or in combination of two or more, or in combination with a so-called decomposition aid.

The additives such as foaming aids, wetting agents, weather resistant stabilizers, anti-aging agents and coloring agents as well as the filler are combined at any stage of the above kneading.

An amorphous olefin rubber or a crystalline olefin resin may be further combined and mixed as a resin raw material in addition to the foamable master batch composed of the olefin based thermoplastic elastomer for foam molding upon injection or extrusion molding.

Specific examples of the amorphous olefin rubber may include ethylene α-olefin copolymer rubber [ethylene/α-olefin (molar ratio) = about 90/10 to 50/50], ethylene α-olefin non-conjugated diene copolymer rubber [ethylene/α-olefin (molar ratio) = about 90/10 to 50/50], propylene α-olefin copolymer rubber [propylene/α-olefin (molar ratio) = about 90/10 to 50/50] and butene α-olefin copolymer rubber [butene/α-olefin (molar ratio) = about 90/10 to 50/50].

Specific examples of the above α-olefin may include ethylene, propylene, 1-butene, 1-pentene, 4-methyl-1-pentene, 1-hexene, 1-octene, 1-nonene, 1-decene, 1-undecene, 1-dodecene, 1-tridecene, 1-tetradecene, 1-pantadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and combinations thereof.

Specific examples of the above crystalline olefin resin may include a random copolymer of propylene with 10 mol% or less of the other α-olefin, a block copolymer of propylene with 30 mol% or less of the other α-olefin, 1-butene homopolymer, a random copolymer of 1-butene homopolymer with 10 mol% or less of the other α-olefin, 4-methyl-1-pentene homopolymer, and a random copolymer of 4-methyl-1-pentene with 20 mol% or less of the other α-olefin.

In the present invention, the resin may also be foamed by a volatile solvent or water in place of the thermally decomposing type foaming agent.

Alternatively, the gas itself may also be dispersed or impregnated in the foaming resin substrate, and in this case, the foaming agent may include carbon dioxide gas and nitrogen gas.

Specifically, carbon dioxide or nitrogen or vapor of the volatile solvent or water is infused and kneaded to disperse before sending out the foaming substrate resin from a molding machine upon extrusion or stamping molding or extrusion molding.

A condition for infusing and kneading these foaming agents before the injection or the extrusion may be either a supercritical state or a non-supercritical state.

After the foaming agent is kneaded and dispersed before the injection or the extrusion, the foamable olefin based thermoplastic elastomer is passed through a nozzle and foam-molded in molds or dies.

In the injection molding, the foamable olefin based thermoplastic elastomer injected through the nozzle can be molded by a publicly known mold operation. That is, the injection molding, or the stamping molding or core back molding is possible in closed type molds.

As described above, the resin composition for foam molding of the present invention is composed of the branched rubber olefin based soft resin (C) obtained by the kneading reaction of the organic peroxide crosslinking type olefin based copolymer rubber (A) and the organic peroxide decomposing type crystalline olefin resin (B), in which the organic peroxide crosslinking type olefin based copolymer rubber (A) is present as the continuous phase as well as the organic peroxide decomposing type crystalline olefin resin (B) is present as the discontinuous phase in this continuous phase in its microaggregation structure, can exert the high foaming magnification by having the microaggregation structure, and can provide the foam which is soft and excellent in cushion property and thermal insulating property.

Therefore, according to the present invention, it becomes possible to provide foam molded articles which can be used for interior parts for automobiles, have high to low foaming magnifications and recycling property, and are soft and excellent in cushion property, thermal insulating property and in-mold foam molding property in the injection molding, the press molding, the transfer molding and the stamping molding.

### BRIEF DESCRIPTION OF DRAWINGS

FIG. 1 is a view showing a transmission electron micrograph showing a microaggregation structure of a resin composition for molding prepared in Example 1;
FIG. 2 is a view showing a transmission electron micrograph showing a microaggregation structure of a resin composition for molding prepared in Example 2;
FIG. 3 is a view showing a transmission electron micrograph showing a microaggregation structure of a resin composition for molding prepared in Comparative Example 1; and
FIG. 4 is a view showing a transmission electron micrograph showing a microaggregation structure of a resin composition for molding prepared in Comparative Example 2.

### BEST MODE(S) FOR CARRYING OUT THE INVENTION

The present invention will be described in more detail below by Examples, but the following Examples are only exemplifications for suitably illustrating the invention and do not limit the invention.

An injection molding machine used for molding the foams of the present invention was an apparatus having a mold clamping force of 450 ton, a plasticizing capacity of 197 kg/h, a screw diameter of 58 mm, a maximum injection pressure of 216 MPa and a maximum injection rate of 528 cm³/s. A core back molding method was practically applied.

Likewise, a mold used for molding the foams of the present invention was an office receiving box with A4 size having a thickness of 4 mm.

### (Example 1)

A foamable olefin based thermoplastic elastomer ((i) a continuous phase was a rubber phase and a discontinuous phase was a crystal phase in a microaggregation structure, (ii) gel fraction: 3.2% by weight) was obtained by kneading 65 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 35 parts by weight of polypropylene [PP; propylene content 100%, MFR (ASTM 1238, 190°C, 2.16 kg load) 5.0/10 minutes] in the presence of 0.15 part by weight of 2,5-dimethyl-2,5-di(tert-dibutylperoxy)hexine-3 [peroxide] and 0.2 parts by weight of trimethylolpropane trimethacrylate [auxiliary agent]. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 200°C, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, a foaming magnification of the molded article was 4.1 times (foaming magnification: specific gravity after foaming/specific gravity before foaming), a molded shape was good, and a feel was like the rubber and good (Asker C hardness: 22).

### (Example 2)

A foamable olefin based thermoplastic elastomer ((i) the continuous phase was the rubber phase and the discontinuous phase was the crystal phase in the microaggregation structure, (ii) gel fraction: 4.2% by weight) was obtained by kneading 75 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.15 part by weight of 2,5-dimethyl-2,5-di(tert-dibutylperoxy)hexine-3 [peroxide] and 0.2 parts by weight of trimethylolpropane trimethacrylate [auxiliary agent]. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 200°C, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 4.3 times (foaming magnification: specific gravity after foaming/specific gravity before foaming), the molded shape also was good, and the feel was like the rubber and good (Asker C hardness: 21).

### (Example 3)

A foamable olefin based thermoplastic elastomer ((i) the continuous phase was a rubber phase and the discontinuous phase was the crystal phase in the microaggregation structure, (ii) gel fraction: 1.3% by weight) was obtained by kneading 75 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.10 part by weight of 2,5-dimethyl-2,5-di(tert-dibutylperoxy)hexine-3 [peroxide] and 0.15 parts by weight of trimethylolpropane trimethacrylate [auxiliary agent]. In a cylinder at 230°C, 0.3% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 4.2 times (foaming magnification: specific gravity after foaming/specific gravity before foaming), the molded shape also was good, and the feel was like the rubber and good (Asker C hardness: 22).

### (Example 4)

A foamable olefin based thermoplastic elastomer ((i) the continuous phase was the rubber phase and the discontinuous phase was the crystal phase in the microaggregation structure, (ii) gel fraction: 4.8% by weight) was obtained by kneading 75 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.3 part by weight of 2,5-dimethyl-2,5-di(tert-dibutylperoxy)hexine-3 [peroxide] and 0.45 parts by weight of trimethylolpropane trimethacrylate [auxiliary agent]. In a cylinder at 230°C, 0.3% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 3.1 times (foaming magnification: specific gravity after foaming/specific gravity before foaming), the molded shape was also good, and the feel was like the rubber and good (Asker C hardness: 35).

### (Example 5)

A foamable olefin based thermoplastic elastomer ((i) the continuous phase was the rubber phase and the discontinuous phase was the crystal phase in the microaggregation structure, (ii) gel fraction: 4.8% by weight) was prepared by kneading 75 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 0.3 part by weight of 2,5-dimethyl-2,5-di(tert-dibutylperoxy)hexine-3 [peroxide] and 0.45 parts by weight of trimethylolpropane trimethacrylate [auxiliary agent]. In a cylinder at 230°C, 0.1% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed, consequently, the foaming magnification of the molded article was 2.3 times (foaming magnification: specific gravity after foaming/specific gravity before foaming), the molded shape was also good, and the feel was like the rubber and good (Asker C hardness: 38).

### (Comparative Example 1)

A foamable olefin based thermoplastic elastomer ((i) the continuous phase was the crystal phase and the discontinuous phase was the rubber phase in the microaggregation structure, (ii) gel fraction: 39% by weight) was obtained by kneading 50 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 50 parts by weight of polypropylene [PP; propylene content 100%, MFR (ASTM 1238, 190°C, 2.16 kg load) 5.0/10 minutes] in the presence of 0.15 part by weight of 2,5-dimethyl-2,5-di(tert-dibutylperoxy)hexine-3 [peroxide] and 0.2 parts by weight of trimethylolpropane trimethacrylate [auxiliary agent]. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 200°C, and then the foamable olefin based thermoplastic elastomer was injected in a mold closed and formed from upper and lower molds (injection condition: injection rate 200 mm/s, mold temperature 30°C). This olefin based thermoplastic elastomer foam molded article was removed, consequently, the molded shape was good, but the foaming magnification was 2.3 times (foaming magnification: specific gravity after foaming/specific gravity before foaming), and the feel was rigid like polypropylene and not good (Asker C hardness: 42).

### Comparative Example 2

A foamable olefin based thermoplastic elastomer ((i) the continuous phase was the crystal phase and the discontinuous phase was the rubber phase in the microaggregation structure, (ii) gel fraction: 45% by weight) was obtained by kneading 80 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 20 parts by weight of polypropylene [PP; propylene content 100%, MFR (ASTM 1238, 190°C, 2.16 kg load) 5.0/10 minutes] in the presence of 0.5 part by weight of 2,5-dimethyl-2,5-di(tert-dibutylperoxy)hexine-3 [peroxide] and 0.2 parts by weight of trimethylolpropane trimethacrylate [auxiliary agent]. A master batch (foamable olefin based thermoplastic elastomer) was prepared by kneading 4 parts by weight of a mixture of sodium hydrogen carbonate and citric acid with 100 parts by weight of the resulting foamable olefin based thermoplastic elastomer. This master batch was melted and dispersed again in a cylinder at 200°C, and then the foamable olefin based thermoplastic elastomer was injected in a mold closed and formed from upper and lower molds (injection condition: injection rate 200 mm/s, mold temperature 30°C).

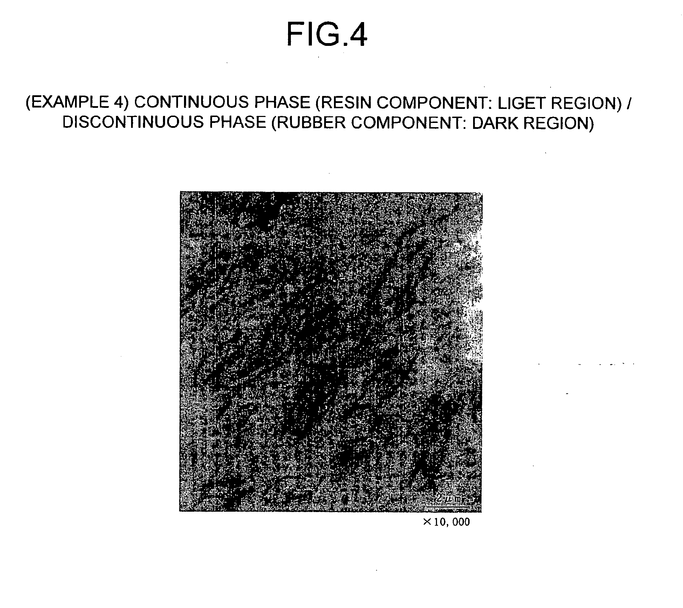

The obtained olefin based thermoplastic elastomer foam molded article was removed, consequently, the molded shape was bad, a foaming magnification was 2.0 times (foaming magnification: specific gravity after foaming/specific gravity before foaming), and the feel was not like the rubber, rigid and not good (Asker C hardness: 51). The foaming magnification was also low and the C hardness became high because the rubber phase was the discontinuous phase as was evident from "the microaggregation structure by a TEM photograph" shown in FIG. 4.

### (Comparative Example 3)

A foamable olefin based thermoplastic elastomer ((i) the continuous phase was the crystal phase and the discontinuous phase was the rubber phase in the microaggregation structure, (ii) gel fraction: 48% by weight) was obtained by kneading 75 parts by weight of ethylene-propylene-non-conjugated diene copolymer rubber [EPT; ethylene content 38 mol%, iodine value 12, MFR (ASTM 1238, 190°C, 2.16 kg load) 1.1 g/10 minutes] and 25 parts by weight of polypropylene [PP; propylene content 100%, MFR (ASTM 1238, 190°C, 2.16 kg load) 5.0/10 minutes] in the presence of 1.0 part by weight of 2,5-dimethyl-2,5-di(tert-dibutylperoxy)hexine-3 [peroxide] and 0.45 parts by weight of trimethylolpropane trimethacrylate [auxiliary agent]. In a cylinder at 230°C, 0.3% by weight of nitrogen gas was melted and dispersed for 100 parts by weight of the resulting foamable olefin based thermoplastic elastomer, and then the foamable olefin based thermoplastic elastomer was injected in a mold closed and formed from upper and lower molds (injection condition: injection rate 200 mm/s, mold temperature 30°C).

The obtained olefin based thermoplastic elastomer foam molded article was removed consequently, the foaming magnification of the molded article was 2.3 times (foaming magnification: specific gravity after foaming/specific gravity before foaming), the molded shape was good, but the feel was very rigid (Asker C hardness: 43).

The constitution fractions of raw materials were exactly the same as those in Example 4, but the gel fraction became high, 48% because an amount of added peroxide was large, and the foaming magnification was lowered as well as the flexibility was poor to become rigid because harsh shearing and thermal history had been given to the raw materials until being finally formed and thus the microaggregation structure had been reversed to change the continuous phase to the crystal phase.

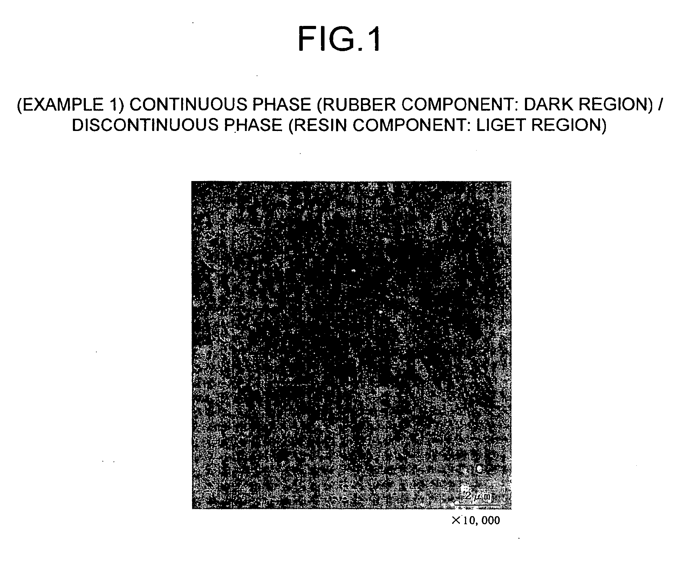

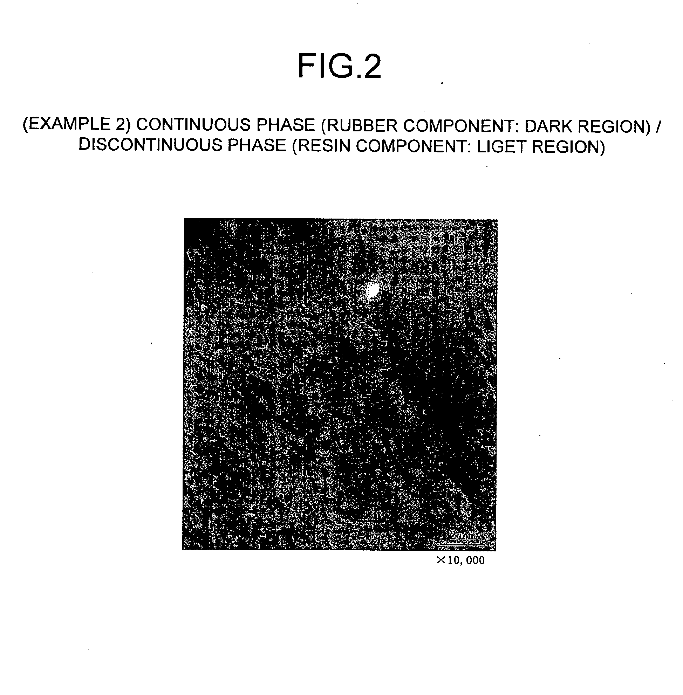

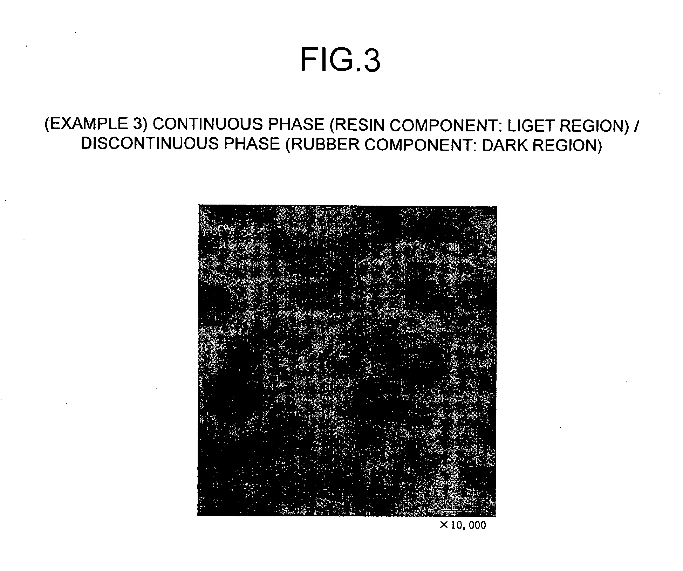

The constitution and evaluation in the above Examples and Comparative Examples were shown in the following Tables 1 and 2, respectively. Units in tables were parts by weight, and were represented by % by weight only when the gas was used as a foaming agent. For Examples 1 and 2, and Comparative Examples 1 and 2, contexture photographs showing the microaggregation structure using the transmission electron microscope were shown in FIGS. 1 to 4.

**(Table 1)**

| | Example 1 | Example 2 | Example 3 | Example 4 | Example 5 |
|---|---|---|---|---|---|
| EPDM | 65 | 75 | 75 | 75 | 75 |
| PP | 35 | 25 | 25 | 25 | 25 |
| Peroxide | 0.15 | 0.15 | 0.10 | 0.3 | 0.3 |
| Foaming agent | 4 | 4 | 0.3wt% | 0.3wt% | 0.1wt% |
| Gel fraction | 3.2% | 4.2% | 1.3% | 4.8% | 4.8% |
| Foaming magnification | 4.1 | 4.3 | 4.2 | 3.1 | 2.3 |
| Molding state | Good | Good | Good | Good | Good |
| Flexibility (C hardness) | 22 | 21 | 22 | 35 | 38 |
| TEM photograph | FIG. 1 | FIG. 2 | - | - | - |

The units of numerals other than the numerals of the foaming magnification in the table are parts by weight, and are represented by % by weight when the foaming agent was the gas.

**(Table 2)**

| | Comparative Example 1 | Comparative Example 2 | Comparative Example 3 |
|---|---|---|---|
| EPDM | 50 | 80 | 75 |
| PP | 50 | 20 | 25 |
| Peroxide | 0.15 | 0.5 | 1.0 |
| Foaming agent | 4 | 4 | 0.3wt% |
| Gel fraction | 39% | 45% | 48% |
| Foaming magnification | 2.3 | 2.0 | 2.3 |
| Molding state | Good | Not good | Not good |
| Flexibility (C hardness) | 42 | 51 | 43 |
| TEM photograph | FIG. 3 | FIG. 4 | - |

The units of numerals other than the numerals of the foaming magnification in the table are parts by weight, and are represented by % by weight when the foaming agent was the gas.

As was evident from the above Tables 1 and 2, the rubber component configured the continuous phase in Examples, but when the combined ratio of EPDM and PP was deviated from the suitable range, the resin component formed the continuous phase, thereby the foaming magnification became the low value such as 2.3 and 2.2 in Comparative Examples whereas in Examples of the present invention, the lowest foaming magnification value was 3.1. In this way, it is understood that the foaming magnification of the foam is vastly increased and the foam molded body which is excellent in soft cushion property, thermal insulating property and recycling property can be obtained by "controlling the combined ratio of the rubber component and the resin component to make the rubber component the continuous phase and make the resin layer the discontinuous phase in the microaggregation structure" which is the characteristic of the present invention.

### INDUSTRIAL APPLICABILITY

As in the above, according to "the resin composition for foam molding, the foam and the method for producing the foam" of the present invention, it becomes possible to provide the foam molded articles which can be used for interior parts for automobiles, have the highly flexible foaming magnification and the recycling property, and are soft and excellent in cushion property, thermal insulating property and in-mold foam molding property.

## Claims

1. A resin composition for a foam comprising:
a branched rubbery olefin based soft resin (C) obtained by a kneading reaction of an organic peroxide crosslinking type olefin based copolymer rubber (A) and an organic peroxide decomposing type crystalline olefin resin (B),
wherein the organic peroxide crosslinking type olefin based copolymer rubber (A) is present as a continuous phase as well as the organic peroxide decomposing type crystalline olefin resin (B) is present as a discontinuous phase in its microaggregation structure.

2. The resin composition for the foam according to claim 1, wherein a combined amount of the organic peroxide crosslinking type olefin based copolymer rubber (A) is 60 parts by weight or more and less than 100 parts by weight based on total 100 parts by weight of the organic peroxide crosslinking type olefin based copolymer rubber (A) and the organic peroxide decomposing type crystalline olefin resin (B).

3. A foam obtained by foaming a branched rubbery olefin based soft resin (C) obtained by a kneading reaction of an organic peroxide crosslinking type olefin based copolymer rubber (A) and an organic peroxide decomposing type crystalline olefin resin (B),
wherein the organic peroxide crosslinking type olefin based copolymer rubber (A) is present as a continuous phase as well as the organic peroxide decomposing type crystalline olefin resin (B) is present as a discontinuous phase in its microaggregation structure.

4. The foam according to claim 3, wherein the combined amount of the organic peroxide crosslinking type olefin based copolymer rubber (A) is 60 parts by weight or more and less than 100 parts by weight based on total 100 parts by weight of the organic peroxide crosslinking type olefin based copolymer rubber (A) and the organic peroxide decomposing type crystalline olefin resin (B).

5. A method for producing a foam comprising:
a step of preparing a branched rubbery olefin based soft resin (C) obtained by kneading and reacting an organic peroxide crosslinking type olefin based copolymer rubber (A) and an organic peroxide decomposing type crystalline olefin resin (B) in the presence of an organic peroxide, wherein the organic peroxide crosslinking type olefin based copolymer rubber (A) is present as a continuous phase as well as the organic peroxide decomposing type crystalline olefin resin (B) is present as a discontinuous phase in its microaggregation structure; and
a step of foaming the rubbery olefin based soft resin (C).

6. The method for producing the foam according to claim 5, wherein the combined amount of the organic peroxide crosslinking type olefin based copolymer rubber (A) is 60 parts by weight or more and less than 100 parts by weight based on total 100 parts by weight of the organic peroxide crosslinking type olefin based copolymer rubber (A) and the organic peroxide decomposing type crystalline olefin resin (B).
